# EUROPEAN PATENT APPLICATION

(11) **EP 4 723 588 A1**
(43) Date of publication of application: **08.04.2026**
(21) Application number: 25205640.3
(22) Date of filing: 30.09.2025
(51) Int. Cl.: H04L 47/2408, H04L 47/28, H04L 47/30, H04W 28/02

(54) **APPARATUSES FOR ENHANCED DELAY STATUS REPORTING IN MOBILE COMMUNICATIONS**

(30) Priority: 07.10.2024 US 202463704035 P; 19.11.2024 US 202463722080 P; 19.09.2025 US 202519333550
(71) Applicant: HTC Corporation, Taoyuan City 330 (TW)
(72) Inventor: LEE, Yen-Yi, 330 Taoyuan City (TW)
(74) Representative: Pritzlaff, Stefanie Lydia

(57) **Abstract**

Various solutions for enhanced delay status reporting (DSR) in mobile communications are described. An apparatus may receive a configuration from a network node. The configuration may include a remaining time threshold for triggering a DSR procedure for one or more logical channels within a logical channel group (LCG). Then, the apparatus may trigger the DSR procedure based on the remaining time threshold. Responsive to triggering the DSR procedure, the apparatus may transmit a DSR medium access control (MAC) control element (CE) to the network node. The DSR MAC CE may include a plurality of entries of delay status information for the LCG, each of the plurality of entries including a pair of a remaining time field and a buffer size field, and an extension (EXT) field indicative of whether an additional pair of the remaining time field and the buffer size field is present for the LCG in a subsequent entry.

## Description

### TECHNICAL FIELD

The present disclosure is generally related to mobile communications and, more particularly, to enhanced delay status reporting (DSR) in mobile communications.

### BACKGROUND

Unless otherwise indicated herein, approaches described in this section are not prior art to the claims listed below and are not admitted as prior art by inclusion in this section.

The wireless communications network has grown exponentially over the years. A long-term evolution (LTE) system offers high peak data rates, low latency, improved system capacity, and low operating cost resulting from simplified network architecture. LTE systems, also known as the 4^{th} generation (4G) system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, each referred to as user equipment (UE). Alternatively, a wireless network may include a hybrid of 2G/3G/4G systems. In 3^{rd} generation partner project (3GPP), the next generation mobile network (NGMN) board has decided to focus the future NGMN activities on defining the end-to-end requirements for 5^{th} generation (5G) new radio (NR) systems, 5G-advanced systems, and 6G systems.

In 3GPP Release 18 for 5G NR, the DSR procedure is introduced to provide the serving next generation Node-B (gNB) with delay status information of logical channel groups (LCGs) via a DSR medium access control (MAC) control element (CE). This reporting allows the delivery of delay-critical packet data convergence protocol (PDCP) service data units (SDUs) to be handled promptly as required by certain delay-sensitive services, such as extended reality (XR), remote control and teleoperation/telesurgery, industrial automation, and vehicle-to-everything (V2X) services. Based on the reported delay status information, the serving gNB may perform scheduling more efficiently and effectively to improve system capacity, e.g., by relaxing time constraints for resource allocation, while still meeting delay requirements (i.e., avoiding excessively late protocol data units (PDUs)). However, the current design of the DSR procedure may nevertheless exhibit inefficiencies with respect to uplink (UL) data and resource scheduling. For example, the DSR procedure is restricted to reporting only one pair of the remaining time (i.e., the shortest remaining value of all running PDCP discardTimers) and the buffer size (i.e., the total amount of delay-critical UL data) per LCG. As a result, the gNB is unaware of the remaining times of other PDCP SDUs associated with running PDCP discardTimers having longer remaining times, and this inevitably reduces the flexibility of UL data and resource scheduling. Another example is that, in the case where there are multiple PDU sets having remaining times below the remainingTimeThreshold in a logical channel, the gNB is unaware of the existence of these multiple PDU sets in the logical channel. Furthermore, another example is that, in the case where two PDU sets with different importance levels exist in a logical channel and the PDUs with lower importance level (i.e., non-delay-critical data) are queued ahead of the PDUs with higher importance level (i.e., delay-critical data), the UL resources granted by the gNB may be insufficient for the logical channel to transmit its delay-critical data, as the PDUs with lower importance level will also consume the granted UL resources.

Therefore, there is a need to provide proper schemes to address these issues.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

One objective of the present disclosure is proposing schemes, concepts, designs, systems, methods, and/or apparatus pertaining to enhanced DSR in mobile communications. It is believed that the above-described issues would be avoided or otherwise alleviated by implementing one or more of the proposed schemes described herein.

In one aspect, an apparatus may comprise a transceiver that, during operation, wirelessly communicates with a network node. The apparatus may also comprise a processor communicatively coupled to the transceiver. The processor, during operation, may perform operations comprising receiving, via the transceiver, a configuration from the network node, wherein the configuration comprises a remaining time threshold for triggering a DSR procedure for one or more logical channels within an LCG. The processor may also perform operations comprising triggering the DSR procedure based on the remaining time threshold. The processor may further perform operations comprising transmitting, via the transceiver, a DSR medium access control (MAC) control element (CE) to the network node responsive to triggering the DSR procedure, wherein the DSR MAC CE comprises a plurality of entries of delay status information for the LCG, each of the plurality of entries comprising a pair of a remaining time field and a buffer size field, and an extension (EXT) field indicative of whether an additional pair of the remaining time field and the buffer size field is present for the LCG in a subsequent entry..

In one aspect, a network node may comprise a transceiver which, during operation, wirelessly communicates with an apparatus. The network node may also comprise a processor communicatively coupled to the transceiver. The processor, during operation, may perform operations comprising transmitting, via the transceiver, a configuration to the apparatus, wherein the configuration comprises a remaining time threshold for triggering a DSR procedure for one or more logical channels within an LCG. The processor may further perform operations comprising receiving, via the transceiver, a DSR MAC CE from the apparatus in the DSR procedure, wherein the DSR MAC CE comprises a plurality of entries of delay status information for the LCG, each of the plurality of entries comprising a pair of a remaining time field and a buffer size field, and an EXT field indicative of whether an additional pair of the remaining time field and the buffer size field is present for the LCG in a subsequent entry.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-loT), Industrial Internet of Things (lloT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale, as some components may be shown to be out of proportion than the size in actual implementation in order to clearly illustrate the concept of the present disclosure.
FIG. 1 is a diagram depicting an example scenario of the format of a DSR MAC CE under current 5G NR framework.
FIG. 2 is a diagram depicting an example scenario of a communication environment in which various solutions and schemes in accordance with the present disclosure may be implemented.
FIG. 3 is a diagram depicting an example scenario of the enhanced DSR procedure in accordance with an implementation of the present disclosure.
FIG. 4 is a diagram depicting an example scenario of the format of a DSR MAC CE in accordance with an implementation of the present disclosure.
FIG. 5 is a diagram depicting an example scenario of the content of a DSR MAC CE in accordance with an implementation of the present disclosure.
FIG. 6 is a diagram depicting another example scenario of the content of a DSR MAC CE in accordance with an implementation of the present disclosure.
FIG. 7 is a block diagram of an example communication system in accordance with an implementation of the present disclosure.
FIG. 8 is a flowchart of an example process in accordance with an implementation of the present disclosure.
FIG. 9 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes, and/or solutions pertaining to enhanced DSR in mobile communications. According to the present disclosure, a number of possible solutions may be implemented separately or jointly. That is, although these possible solutions may be described below separately, two or more of these possible solutions may be implemented in one combination or another.

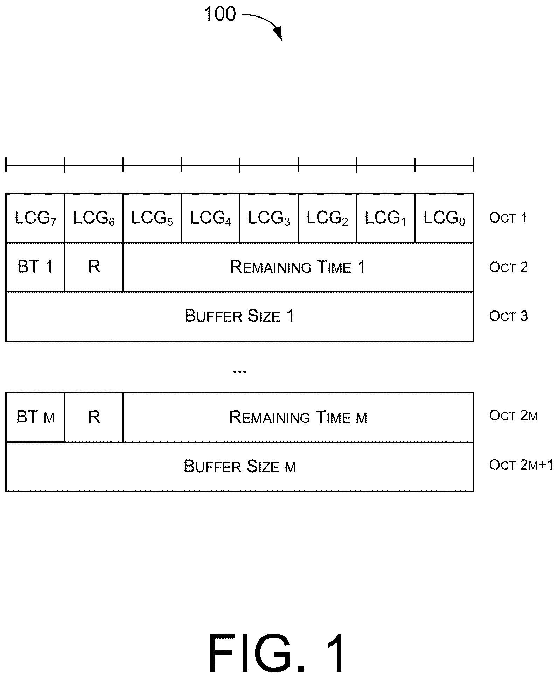

FIG. 1 illustrates an example scenario 100 of the format of a DSR MAC CE under current 5G NR framework. As shown in FIG. 1, a DSR MAC CE may carry delay status information for multiple LCGs (denoted as LCGi, where i=0-7), but the delay status information for an LCH includes only a single pair of a remaining time field and a buffer size field. The remaining time field indicates the shortest remaining time of the running PDCP discardTimers among all PDCP SDUs that are buffered for the LCG but have not been transmitted in any MAC PDU. The buffer size field indicates the total amount of delay-critical UL data for the LCG. Due to the restriction that only a single pair of the remaining time field and the buffer size field can be reported for each LCG, the scheduling of UL data and resources may become inefficient and ineffective, as mentioned in the above-described issues.

In view of the above, the present disclosure proposes a number of schemes pertaining to enhanced DSR in mobile communications. According to the schemes of the present disclosure, the DSR procedure is enhanced by allowing a DSR MAC CE to contain multiple entries of delay status information for an LCG. Specifically, each entry includes not only a pair of the remaining time field and the buffer size field, but also an extension field indicative of whether an additional pair of the remaining time field and the buffer size field is present for the same LCG in a subsequent entry. In other words, the extension field indicates whether the next entry of delay status information (i.e., the next pair of the remaining time field and the buffer size field) belongs to the same LCG as the current entry (i.e., the current pair of the remaining time field and the buffer size field). Accordingly, by applying the schemes of the present disclosure, the reported delay status information may include more detailed information (e.g., the distribution of the remaining times) of the delay-critical data, thereby improving the efficiency and effectiveness of UL data and resource scheduling.

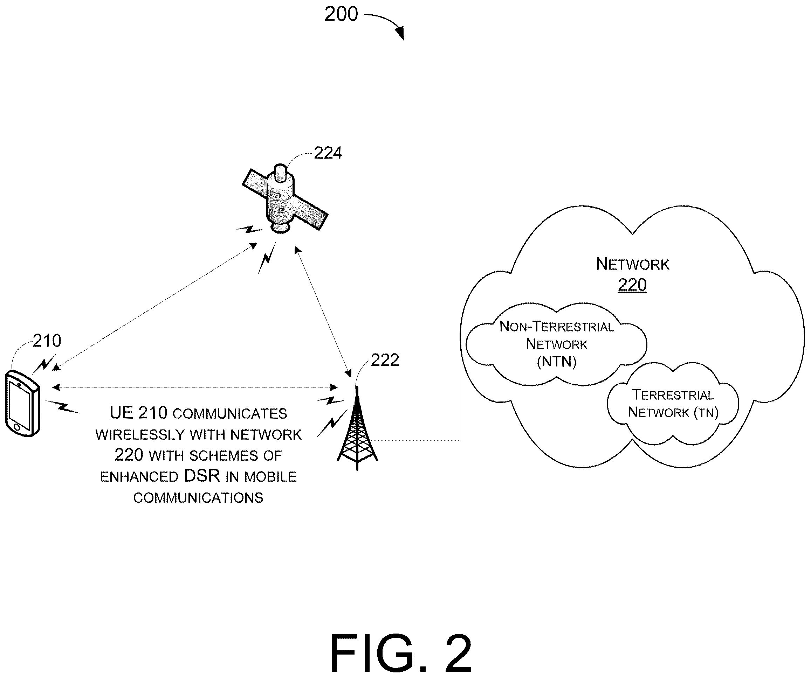

FIG. 2 illustrates an example scenario 200 of a communication environment in which various solutions and schemes in accordance with the present disclosure may be implemented. Scenario 200 involves a UE 210 in wireless communication with a network 220 (e.g., a wireless network including a non-terrestrial network (NTN) and a TN) via at least a terrestrial network node 222 (e.g., a base station (BS) such as an eNB, a gNB, or a transmission/reception point (TRP)) and/or at least a non-terrestrial network node 224 (e.g., a satellite). For example, the terrestrial network node 222 may form a TN serving cell for wireless communication with the UE 210, or the terrestrial network node 222 and the non-terrestrial network node 224 may form an NTN serving cell for wireless communication with the UE 210. In some implementations, the network 220 may be a 4G/5G/B5G/6G network, and the UE 210 may be a smartphone, a tablet computer, a laptop computer, or a notebook computer. Alternatively, the network 220 may be an loT/ NB-loT/lloT network, and the UE 210 may be an loT device such as an NB-loT UE or an enhanced machine-type communication (eMTC) UE (e.g., a bandwidth reduced low complexity (BL) UE or a coverage enhancement (CE) UE). In such communication environment, the UE 210, the network 220, the terrestrial network node 222, and/or the non-terrestrial network node 224 may implement various schemes pertaining to enhanced DSR in mobile communications in accordance with the present disclosure, as described below. It is noteworthy that, while the various proposed schemes may be individually or separately described below, in actual implementations, some or all of the proposed schemes may be utilized or otherwise implemented jointly. Of course, each of the proposed schemes may be utilized or otherwise implemented individually or separately.

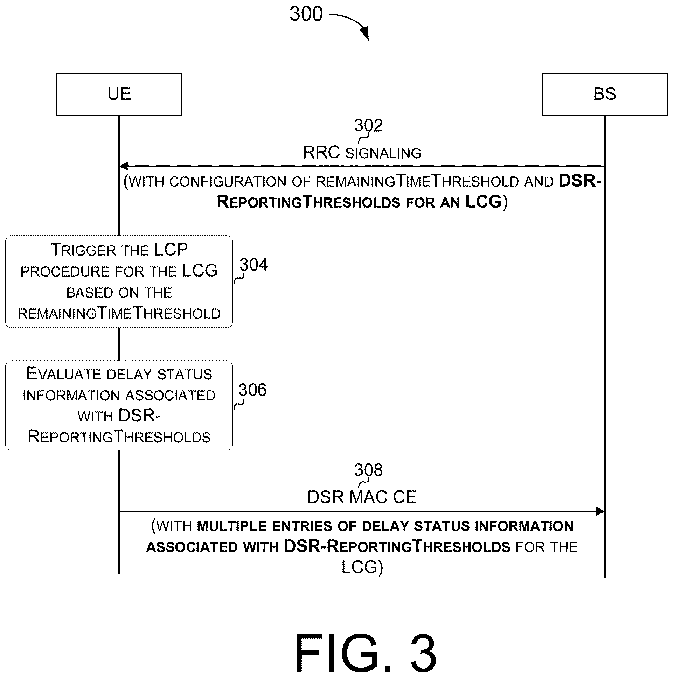

FIG. 3 illustrates an example scenario 300 of the enhanced DSR procedure in accordance with an implementation of the present disclosure. In step 302, the UE receives a radio resource control (RRC) signaling from the BS. Specifically, the RRC signaling includes the configuration of a remaining time threshold (denoted as remainingTimeThreshold in FIG. 3) for an LCG. The remaining time threshold is used for triggering the DSR procedure for logical channel(s) within the LCG. The data (e.g., each PDCP SDU) of a logical channel is associated with a discard timer (e.g., PDCP discardTimer), and if the remaining time of the discard timer is less than the remaining time threshold, the data is considered as delay-critical data. If the data does not get transmitted before the discard timer expires, then the data is discarded. Furthermore, the configuration also includes multiple reporting thresholds (denoted as DSR-ReportingThreshold(s) in FIG. 3) for the LCG. The reporting thresholds may be provided in a list of thresholds (e.g., called DSR-reportingThresList) on remaining time for reporting the amount of UL data buffered in an LCG. In one example, the reporting thresholds may be configured in ascending order (e.g., DSR-ReportingThreshold#1=3 milliseconds (ms), DSR-ReportingThreshold#2=5 ms, and DSR-ReportingThreshold#3=12 ms, etc.). The configuration may be contained in a MAC-CellGroupConfig information element (IE) in the RRC signaling.

Next, in step 304, the UE triggers the DSR procedure for the LCG based on the remaining time threshold. Specifically, the DSR procedure is triggered when at least one of the logical channels within the LCG carries data with a remaining time of an associated PDCP discard timer less than the remaining time threshold. In step 306, the UE evaluates the delay status information associated with the reporting thresholds. Specifically, for each logical channel of the LCG, the UE may check if the shortest remaining time of the running PDCP discardTimers among all the PDCP SDUs, that are buffered for the logical channel but have not been transmitted in any MAC PDU, becomes below any of the reporting thresholds, and if so, calculates the total amount of delay-critical data associated with the reporting threshold. In step 308, the UE transmits a DSR MAC CE including multiple entries of delay status information associated with the reporting thresholds for the LCG to the BS. Such DSR MAC CE is also called a Multiple Entry DSR MAC CE.

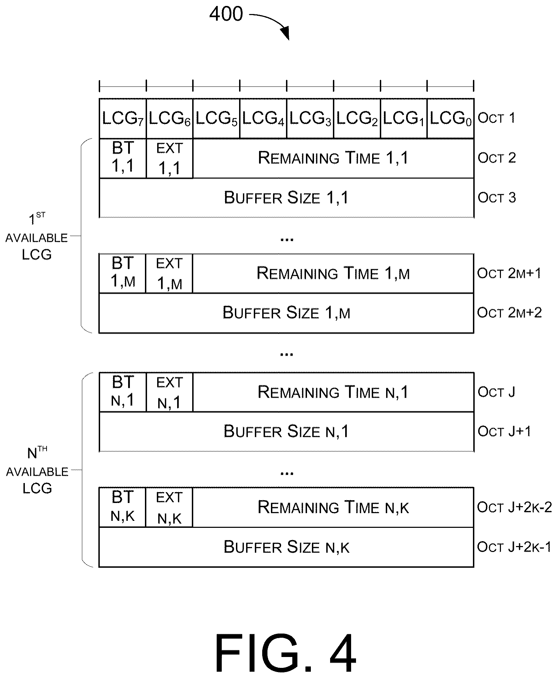

FIG. 4 illustrates an example scenario 400 of the format of a DSR MAC CE in accordance with an implementation of the present disclosure. As shown in FIG. 4, a DSR MAC CE may carry delay status information for multiple LCGs, each of which has a corresponding LCGᵢ field (e.g., LCGᵢ=1) indicating that the delay status information for this LCG is present (i.e., this LCG has delay status information to report). For example, an LCG is considered as an available LCG if the value of its corresponding LCGᵢ field=1, or is not considered as an available LCG if the value of its corresponding LCGᵢ field=0. In particular, the delay status information for an LCH may include multiple entries of delay status information, each associated with one of the reporting thresholds. Specifically, the delay status information associated with a reporting threshold (i.e., an entry of delay status information) may include a buffer-size table (BT) field, an extension (EXT) field, and a pair of the remaining time field and the buffer size field, and may be reported in two consecutive octets. That is, in the DSR MAC CE, there may be multiple pairs of the remaining time field and the buffer size field for an LCG. The EXT field (which was a reserved bit and is now reused as the extension field) indicates whether an additional pair of the remaining time field and the buffer size field is present for the same LCG in the subsequent entry, i.e., whether the next pair of the remaining time field and the buffer size field belongs to the same LCG as the current pair. For example, the EXT field may include one bit which is set to 1 to indicate that an additional pair of the remaining time field and the buffer size field is present for the same LCG in the subsequent entry, or is set to 0 to indicate that no additional field is present for the same LCG in the subsequent entry. The delay status information for different LCGs may be reported in the DSR MAC CE in ascending order based on the LCGᵢ field which indicates whether the delay status information for LCGᵢ is present.

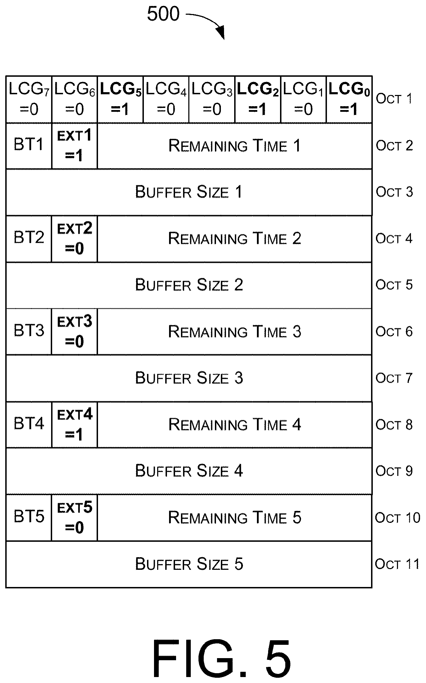

FIG. 5 illustrates an example scenario 500 of the content of a DSR MAC CE in accordance with an implementation of the present disclosure. As shown in FIG. 5, the available LCGs may be identified based on the LCGᵢ fields in Octet 1. That is, LCGO, LCG2, and LCG5 are available LCGs (i.e., LCGs with LCGi=1) among LCGO-LCG7. Firstly, the fields of BT1, Remaining Time 1, and Buffer Size 1 belong to LCGO, and the fields of BT2, Remaining Time 2, and Buffer Size 2 also belong to LCG0 due to that the EXT field in Octet 2 is 1. Next, the fields of BT3, Remaining Time 3, and Buffer Size 3 belong to LCG2 due to that the EXT field in Octet 4 is 0 and that LCG2 is the next available LCG after LCG0. Subsequently, the fields of BT4, Remaining Time 4, and Buffer Size 4 belong to LCG5 due to that the EXT field in Octet 6 is 0 and that LCG5 is the next available LCG after LCG2. Lastly, the fields of BT5, Remaining Time 5, and Buffer Size 5 belong to LCG5 due to that the EXT field in Octet 8 is 1. It is noted that since the EXT field in Octet 10 is 0 and there is no next available LCG after LCG5, it may be determined that there is no further pair of delay information in this DSR MAC CE.

Alternatively, in some implementations, the EXT field may be used to indicate whether the next pair of the remaining time field and the buffer size field belongs to the next available LCG. Taking scenario 500 as an example to illustrate such alternative implementations, the fields of BT1, Remaining Time 1, and Buffer Size 1 belong to LCGO, while the fields of BT2, Remaining Time 2, and Buffer Size 2 belong to LCG2 since the EXT field in Octet 2 is 1 and LCG2 is the next available LCG after LCG0. Next, the fields of BT3, Remaining Time 3, and Buffer Size 3, and the fields of BT4, Remaining Time 4, and Buffer Size 4 also belong to LCG2 since both the EXT fields in Octet 4 and Octet 6 are 0. Then, the fields of BT5, Remaining Time 5, and Buffer Size 5 belong to LCG5 since the EXT field in Octet 8 is 1 and LCG5 is the next available LCG after LCG2.

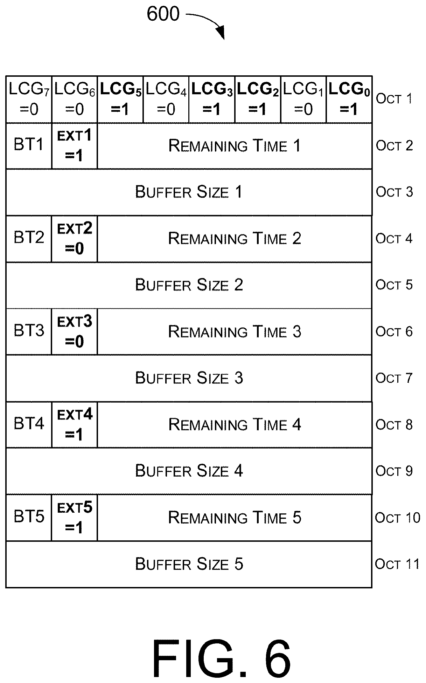

Alternatively, in some implementations, the EXT field may be used to indicate whether the current pair of the remaining time field and the buffer size field belongs to the same LCG as the preceding pair. FIG. 6 illustrates an example scenario 600 of the content of a DSR MAC CE in accordance with an implementation of the present disclosure. In a first example, if the value of the EXT field remains the same (as the EXT field in the preceding entry), then the current pair of the remaining time field and the buffer size field belongs to the same LCG as the preceding pair; or otherwise, if the value of the EXT field changes (e.g., compared the EXT field in the preceding entry), then the current pair of the remaining time field and the buffer size field belongs to the next available LCG. As in the first example in accordance with scenario 600, the fields of BT1, Remaining Time 1, and Buffer Size 1 belong to LCGO, while the fields of BT2, Remaining Time 2, and Buffer Size 2 belong to LCG2 due to that the EXT field in Octet 4 is 0, which is different from the EXT field in Octet 2, and that the next available LCG after LCG0 is LCG2. Next, the fields of BT3, Remaining Time 3, and Buffer Size 3 also belong to LCG2 since the EXT field in Octet 6 is 0, which is the same as the EXT field in Octet 4. Then, the fields of BT4, Remaining Time 4, and Buffer Size 4 belong to LCG3 due to that the EXT field in Octet 8 is 1, which is different from the EXT field in Octet 6, and that the next available LCG after LCG2 is LCG3. Subsequently, the fields of BT5, Remaining Time 5, and Buffer Size 5 also belong to LCG3 since the EXT field in Octet 10 is 1, which is the same as the EXT field in Octet 8. It is noted that the value of the first EXT field (i.e., the EXT field in Octet 2) may be set to either 1 or 0 since the fields of BT1, Remaining Time 1, and Buffer Size 1 always belong to the first available LCG.

In a second example, the (absolute) value of the EXT field is used to indicate whether the current pair of the remaining time field and the buffer size field belongs to the same LCG as the preceding pair, e.g., if EXT=0, then the current pair of the remaining time field and the buffer size field belongs to the same LCG as the preceding pair, and if EXT=1, then the current pair of the remaining time field and the buffer size field belongs to the next available LCG. As in the second example in accordance with scenario 600, the fields of BT1, Remaining Time 1, and Buffer Size 1 belong to LCGO, and the fields of BT2, Remaining Time 2, and Buffer Size 2 and the fields of BT3, Remaining Time 3, and Buffer Size 3 also belong to LCG0 since both the EXT fields in Octet 4 and Octet 6 are 0. Next, the fields of BT4, Remaining Time 4, and Buffer Size 4 belong to LCG2 since the EXT field in Octet 8 is 1 and the next available LCG after LCG0 is LCG2. Subsequently, the fields of BT5, Remaining Time 5, and Buffer Size 5 belong to LCG3 since the EXT field in Octet 10 is 1 and the next available LCG after LCG2 is LCG3. Alternatively, in another example, if the EXT field is 1, then the current pair of the remaining time field and the buffer size field belongs to the same LCG as the preceding pair, and if the EXT field is 0, then the current pair of the remaining time field and the buffer size field belongs to the next available LCG. It is noted that the value of the first EXT field (i.e., the EXT field in Octet 2) may be set to either 1, 0, or reserved, since the fields of BT1, Remaining Time 1, and Buffer Size 1 always belong to the first available LCG.

In some implementations, the multiple pairs of delay information for an LCG may be grouped based on the reporting thresholds configured by the network through an RRC message. In one example, if an LCG is configured with more than one reporting threshold, the delay status information associated with different reporting thresholds in the LCG may be reported consecutively in ascending order based on the values of the reporting thresholds. In one example, if the network configured two reporting thresholds for an LCG through a MAC-CellGroupConfig IE, the UE may report two corresponding pairs of the remaining time field and the buffer size field for this LCG.

In some implementations, the multiple pairs of delay information for an LCG may be grouped based on PDU sets. For example, if there are four PDU sets in the LCG, the UE may report four corresponding pairs of the remaining time field and the buffer size field for the LCG.

In some implementations, the multiple pairs of delay information for an LCG may be grouped based on PDU set importance levels. For example, if there are three PDU set importance levels among the data in the LCG, the UE may report three corresponding pairs of the remaining time field and the buffer size field for the LCG.

In some implementations, the reserved bit R in the DSR MAC CE (as shown in FIG. 1) may be used to indicate the PDU set importance level of its corresponding delay information. In one example, if the R field is set to 1, its corresponding pair of the remaining time field and the buffer size field belongs to a high importance PDU set, and if the R field is set to 0, its corresponding pair of the remaining time field and the buffer size field belongs to a low importance PDU set. In another example, if the R field is set to 0, its corresponding pair of the remaining time field and the buffer size field belongs to a low importance PDU set, and if the R field is set to 1, its corresponding pair of the remaining time field and the buffer size field belongs to a high importance PDU set.

### Illustrative Implementations

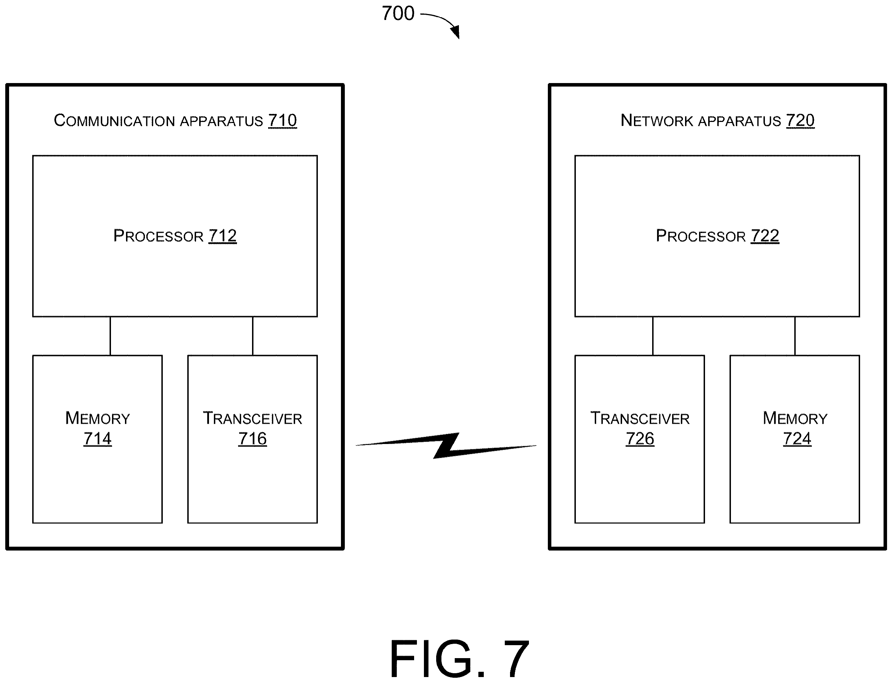

FIG. 7 illustrates an example communication system 700 having an example communication apparatus 710 and an example network apparatus 720 in accordance with an implementation of the present disclosure. Each of communication apparatus 710 and network apparatus 720 may perform various functions to implement schemes, techniques, processes, and methods described herein pertaining to enhanced DSR in mobile communications, including scenarios/schemes described above as well as processes 800 and 900 described below.

Communication apparatus 710 may be a part of an electronic apparatus, which may be a dual-steer device containing one or more UEs such as a portable or mobile apparatus, a wearable apparatus, a wireless communication apparatus, or a computing apparatus. For instance, communication apparatus 710 may be implemented in a smartphone, a smartwatch, a personal digital assistant, an electronic control unit (ECU) in a vehicle, a digital camera, or a computing equipment such as a tablet computer, a laptop computer, or a notebook computer. Communication apparatus 710 may also be a part of a machine type apparatus, which may be an loT, NB-loT, eMTC, IIoT UE, such as an immobile or a stationary apparatus, a home apparatus, a roadside unit (RSU), a wire communication apparatus, or a computing apparatus. For instance, communication apparatus 710 may be implemented in a smart thermostat, a smart fridge, a smart door lock, a wireless speaker, or a home control center. Alternatively, communication apparatus 710 may be implemented in the form of one or more integrated-circuit (IC) chips, such as, for example and without limitation, one or more single-core processors, one or more multi-core processors, one or more reduced-instruction-set computing (RISC) processors, or one or more complex-instruction-set-computing (CISC) processors. Communication apparatus 710 may include at least some of those components shown in FIG. 7, such as a processor 712, for example. Communication apparatus 710 may further include one or more other components not pertinent to the proposed schemes of the present disclosure (e.g., internal power supply, display device and/or user interface device), and, thus, such component(s) of communication apparatus 710 are neither shown in FIG. 7 nor described below in the interest of simplicity and brevity.

Network apparatus 720 may be a part of an electronic apparatus, which may be a network node such as a satellite, a BS, a small cell, a router, or a gateway of a 4G/5G/B5G/6G, NR, loT, NB-loT, or IIoT network. Alternatively, network apparatus 720 may be implemented in the form of one or more IC chips, such as, for example and without limitation, one or more single-core processors, one or more multi-core processors, or one or more RISC or CISC processors. Network apparatus 720 may include at least some of those components shown in FIG. 7, such as a processor 722, for example. Network apparatus 720 may further include one or more other components not pertinent to the proposed scheme of the present disclosure (e.g., internal power supply, display device and/or user interface device), and, thus, such component(s) of network apparatus 720 are neither shown in FIG. 7 nor described below in the interest of simplicity and brevity.

In one aspect, each of processor 712 and processor 722 may be implemented in the form of one or more single-core processors, one or more multi-core processors, or one or more CISC processors. That is, even though a singular term "a processor" is used herein to refer to processor 712 and processor 722, each of processor 712 and processor 722 may include multiple processors in some implementations and a single processor in other implementations in accordance with the present disclosure. In another aspect, each of processor 712 and processor 722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 712 and processor 722 is a special-purpose machine specifically designed, arranged and configured to perform specific tasks in a device (e.g., as represented by communication apparatus 710) and a network node (e.g., as represented by network apparatus 720) in accordance with various implementations of the present disclosure.

In some implementations, communication apparatus 710 may also include a transceiver 716 coupled to processor 712 and capable of wirelessly transmitting and receiving data. In some implementations, transceiver 716 may be capable of wirelessly communicating with different types of UEs and/or wireless networks of different RATs. In some implementations, transceiver 716 may be equipped with a plurality of antenna ports (not shown) such as, for example, four antenna ports. That is, transceiver 716 may be equipped with multiple transmit antennas and multiple receive antennas for multiple-input multiple-output (MIMO) wireless communications. In some implementations, network apparatus 720 may also include a transceiver 726 coupled to processor 722. Transceiver 726 may include a transceiver capable of wirelessly transmitting and receiving data. In some implementations, transceiver 726 may be capable of wirelessly communicating with different types of UEs of different RATs. In some implementations, transceiver 726 may be equipped with a plurality of antenna ports (not shown) such as, for example, four antenna ports. That is, transceiver 726 may be equipped with multiple transmit antennas and multiple receive antennas for MIMO wireless communications.

In some implementations, communication apparatus 710 may further include a memory 714 coupled to processor 712 and capable of being accessed by processor 712 and storing data therein. In some implementations, network apparatus 720 may further include a memory 724 coupled to processor 722 and capable of being accessed by processor 722 and storing data therein. Each of memory 714 and memory 724 may include a type of random-access memory (RAM) such as dynamic RAM (DRAM), static RAM (SRAM), thyristor RAM (TRAM), and/or zero-capacitor RAM (Z-RAM). Alternatively, or additionally, each of memory 714 and memory 724 may include a type of read-only memory (ROM) such as mask ROM, programmable ROM (PROM), erasable programmable ROM (EPROM), and/or electrically erasable programmable ROM (EEPROM). Alternatively, or additionally, each of memory 714 and memory 724 may include a type of non-volatile random-access memory (NVRAM) such as flash memory, solid-state memory, ferroelectric RAM (FeRAM), magnetoresistive RAM (MRAM), and/or phase-change memory.

Each of communication apparatus 710 and network apparatus 720 may be a communication entity capable of communicating with each other using various proposed schemes in accordance with the present disclosure. For illustrative purposes and without limitation, a description of capabilities of communication apparatus 710, as a UE, and network apparatus 720, as a network node (e.g., BS), is provided below with processes 800 and 900.

### Illustrative Processes

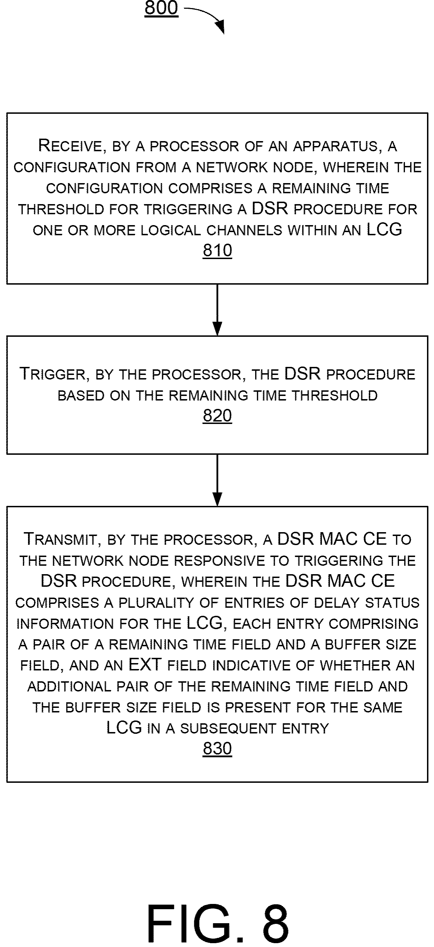

FIG. 8 illustrates an example process 800 in accordance with an implementation of the present disclosure. Process 800 may be an example implementation of above scenarios/schemes, whether partially or completely, with respect to enhanced DSR in mobile communications. Process 800 may represent an aspect of implementation of features of communication apparatus 710. Process 800 may include one or more operations, actions, or functions as illustrated by one or more of blocks 810 to 830. Although illustrated as discrete blocks, various blocks of process 800 may be divided into additional blocks, combined into fewer blocks, or eliminated, depending on the desired implementation. Moreover, the blocks of process 800 may be executed in the order shown in FIG. 8 or, alternatively in a different order. Process 800 may be implemented by or in communication apparatus 710 or any suitable UE or machine type device. Solely for illustrative purposes and without limiting the scope, process 800 is described below in the context of communication apparatus 710, as a UE, and network apparatus 720, as a network node (e.g., a BS such as gNB). Process 800 may begin at block 810.

At block 810, process 800 may involve processor 712 of communication apparatus 710, receiving, via transceiver 716, a configuration from network apparatus 720, wherein the configuration comprises a remaining time threshold for triggering a DSR procedure for one or more logical channels within an LCG. Process 800 may proceed from block 810 to block 820.

At block 820, process 800 may involve processor 712 triggering the DSR procedure based on the remaining time threshold. Process 800 may proceed from block 820 to block 830.

At block 830, process 800 may involve processor 712 transmitting, via transceiver 716, a DSR MAC CE to network apparatus 720 responsive to triggering the DSR procedure, wherein the DSR MAC CE comprises a plurality of entries of delay status information for the LCG, each of the plurality of entries comprising a pair of a remaining time field and a buffer size field, and an EXT field indicative of whether an additional pair of the remaining time field and the buffer size field is present for the LCG in a subsequent entry.

In some implementations, the configuration may further include a plurality of reporting thresholds on remaining time for reporting the delay status information for the LCG, and each of the plurality of entries of the delay status information is associated with one of the plurality of reporting thresholds.

In some implementations, for each of the plurality of entries of the delay status information, the remaining time field may indicate a shortest remaining time among all PDCP SDUs that have not been transmitted in any MAC PDU and are associated with the one of the plurality of reporting thresholds (i.e., the reporting threshold that the current entry is associated with), and the buffer size field may indicate a total amount of delay-reporting data associated with the one of the plurality of reporting thresholds.

In some implementations, the configuration may further include a DSR reporting threshold list containing the plurality of reporting thresholds.

In some implementations, the EXT field may include one bit, which is set to 1 to indicate that the additional pair of the remaining time field and the buffer size field is present for the same LCG in the subsequent entry, or is set to 0 to indicate that no additional field is present for the same LCG in the subsequent entry.

In some implementations, each of the plurality of entries of the delay status information for the LCG may be reported in two consecutive octets of the DSR MAC CE.

In some implementations, the plurality of entries of the delay status information for the LCG may be reported consecutively in an ascending order based on values of the plurality of reporting thresholds.

In some implementations, the delay status information for different LCGs may be comprised in the DSR MAC CE in an ascending order based on LCG fields corresponding to the different LCGs, and each of the LCG fields may indicate whether the delay status information for one LCG is present.

In some implementations, the configuration may be received in a MAC-CellGroupConfig IE of an RRC signaling.

In some implementations, each of the plurality of entries of the delay status information for the LCG may include a BT field, and the EXT field may be positioned between the BT field and the pair of the remaining time field and the buffer size field.

In some implementations, the DSR procedure may be triggered in an event that at least one of the one or more logical channels within the LCG carries data with a remaining time of an associated PDCP discard timer less than the remaining time threshold.

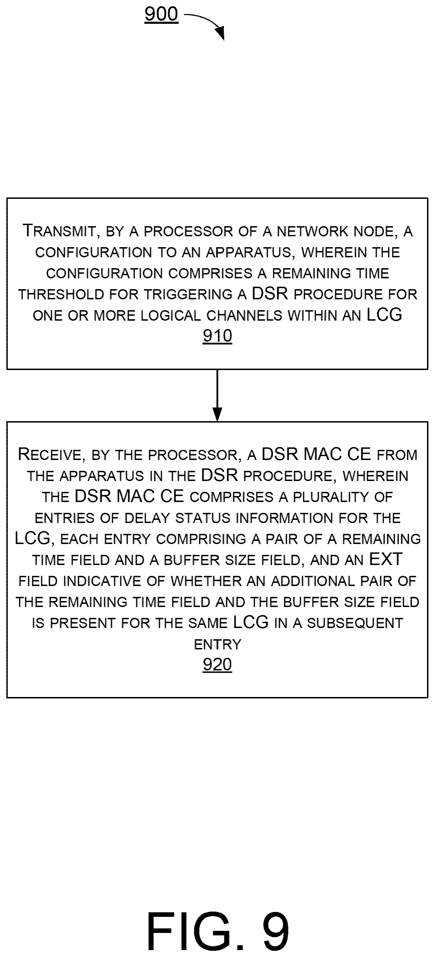

FIG. 9 illustrates an example process 900 in accordance with an implementation of the present disclosure. Process 900 may be an example implementation of above scenarios/schemes, whether partially or completely, with respect to enhanced DSR in mobile communications. Process 900 may represent an aspect of implementation of features of network apparatus 720. Process 900 may include one or more operations, actions, or functions as illustrated by one or more of blocks 910 to 920. Although illustrated as discrete blocks, various blocks of process 900 may be divided into additional blocks, combined into fewer blocks, or eliminated, depending on the desired implementation. Moreover, the blocks of process 900 may be executed in the order shown in FIG. 9 or, alternatively in a different order. Process 900 may be implemented by or in network apparatus 720 as well as any variations thereof. Solely for illustrative purposes and without limiting the scope, process 900 is described below in the context of communication apparatus 710, as a UE, and network apparatus 720, as a network node (e.g., a BS such as gNB). Process 900 may begin at block 910.

At block 910, process 900 may involve processor 722 of network apparatus 720, transmitting, via transceiver 726, a configuration to communication apparatus 710, wherein the configuration comprises a remaining time threshold for triggering a DSR procedure for one or more logical channels within an LCG. Process 900 may proceed from block 910 to block 920.

At block 920, process 900 may involve processor 722 receiving, via transceiver 726, a DSR MAC CE from communication apparatus 710 in the DSR procedure, wherein the DSR MAC CE comprises a plurality of entries of delay status information for the LCG, each of the plurality of entries comprising a pair of a remaining time field and a buffer size field, and an EXT field indicative of whether an additional pair of the remaining time field and the buffer size field is present for the LCG in a subsequent entry.

In some implementations, the configuration may further include a plurality of reporting thresholds on remaining time for reporting the delay status information for the LCG, and each of the plurality of entries of the delay status information is associated with one of the plurality of reporting thresholds.

In some implementations, for each of the plurality of entries of the delay status information, the remaining time field may indicate a shortest remaining time among all PDCP SDUs that have not been transmitted in any MAC PDU and are associated with the one of the plurality of reporting thresholds (i.e., the reporting threshold that the current entry is associated with), and the buffer size field may indicate a total amount of delay-reporting data associated with the one of the plurality of reporting thresholds.

In some implementations, the configuration may further include a DSR reporting threshold list containing the plurality of reporting thresholds.

In some implementations, the EXT field may include one bit, which is set to 1 to indicate that the additional pair of the remaining time field and the buffer size field is present for the same LCG in the subsequent entry, or is set to 0 to indicate that no additional field is present for the same LCG in the subsequent entry.

In some implementations, each of the plurality of entries of the delay status information for the LCG may be reported in two consecutive octets of the DSR MAC CE.

In some implementations, the plurality of entries of the delay status information for the LCG may be reported consecutively in an ascending order based on values of the plurality of reporting thresholds.

In some implementations, the delay status information for different LCGs may be comprised in the DSR MAC CE in an ascending order based on LCG fields corresponding to the different LCGs, and each of the LCG fields may indicate whether the delay status information for one LCG is present.

In some implementations, the configuration may be transmitted in a MAC-CellGroupConfig IE of an RRC signaling.

In some implementations, each of the plurality of entries of the delay status information for the LCG may include a BT field, and the EXT field may be positioned between the BT field and the pair of the remaining time field and the buffer size field.

In some implementations, the DSR procedure may be triggered by communication apparatus 710 in an event that at least one of the one or more logical channels within the LCG carries data with a remaining time of an associated PDCP discard timer less than the remaining time threshold.

In light of the above-described embodiments, it is noteworthy that, by applying the schemes of the present disclosure, the DSR procedure is enhanced by allowing a DSR MAC CE to contain multiple entries of delay status information for an LCG and contain an extension field indicative of whether an additional pair of the remaining time field and the buffer size field is present for the same LCG in a subsequent entry. In other words, the extension field indicates whether the next entry of delay status information (i.e., the next pair of the remaining time field and the buffer size field) belongs to the same LCG as the current entry (i.e., the current pair of the remaining time field and the buffer size field). Accordingly, the enhanced DSR procedure may report more detailed information (e.g., the distribution of the remaining times) of the delay-critical data to improve the efficiency and effectiveness of UL data and resource scheduling.

### Additional Notes

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

## Claims

1. An apparatus, comprising:
a transceiver which, during operation, wirelessly communicates with a network node; and
a processor communicatively coupled to the transceiver such that, during operation, the processor performs operations comprising:
receiving, via the transceiver, a configuration from the network node, wherein the configuration comprises a remaining time threshold for triggering a delay status reporting (DSR) procedure for one or more logical channels within a logical channel group (LCG);
triggering the DSR procedure based on the remaining time threshold; and
transmitting, via the transceiver, a DSR medium access control (MAC) control element (CE) to the network node responsive to triggering the DSR procedure, wherein the DSR MAC CE comprises a plurality of entries of delay status information for the LCG, each of the plurality of entries comprising a pair of a remaining time field and a buffer size field, and an extension (EXT) field indicative of whether an additional pair of the remaining time field and the buffer size field is present for the LCG in a subsequent entry.

2. The apparatus of Claim 1, wherein the configuration further comprises a plurality of reporting thresholds on remaining time for reporting the delay status information for the LCG, and each of the plurality of entries of the delay status information is associated with one of the plurality of reporting thresholds.

3. The apparatus of Claim 2, wherein for each of the plurality of entries of the delay status information, the remaining time field indicates a shortest remaining time among all packet data convergence protocol (PDCP) service data units (SDUs) that have not been transmitted in any MAC protocol data unit (PDU) and are associated with the one of the plurality of reporting thresholds, and the buffer size field indicates a total amount of delay-reporting data associated with the one of the plurality of reporting thresholds.

4. The apparatus of Claim 2, wherein the configuration further comprises a DSR reporting threshold list comprising the plurality of reporting thresholds.

5. The apparatus of Claim 1, wherein the EXT field comprises one bit, which is set to 1 to indicate that the additional pair of the remaining time field and the buffer size field is present for the same LCG in the subsequent entry, or is set to 0 to indicate that no additional field is present for the same LCG in the subsequent entry.

6. The apparatus of Claim 1, wherein each of the plurality of entries of the delay status information for the LCG is reported in two consecutive octets of the DSR MAC CE.

7. The apparatus of Claim 2, wherein the plurality of entries of the delay status information for the LCG are reported consecutively in an ascending order based on values of the plurality of reporting thresholds.

8. The apparatus of Claim 1, wherein the delay status information for different LCGs is comprised in the DSR MAC CE in an ascending order based on LCG fields corresponding to the different LCGs, and each of the LCG fields indicates whether the delay status information for one LCG is present.

9. The apparatus of Claim 1, wherein the configuration is received in a MAC-CellGroupConfig information element (IE) of a radio resource control (RRC) signaling.

10. The apparatus of Claim 1, wherein each of the plurality of entries of the delay status information for the LCG comprise a buffer-size table (BT) field, and the EXT field is positioned between the BT field and the pair of the remaining time field and the buffer size field.

11. A network node, comprising:
a transceiver which, during operation, wirelessly communicates with an apparatus; and
a processor communicatively coupled to the transceiver such that, during operation, the processor performs operations comprising:
transmitting, via the transceiver, a configuration to the apparatus, wherein the configuration comprises a remaining time threshold for triggering a delay status reporting (DSR) procedure for one or more logical channels within a logical channel group (LCG); and
receiving, via the transceiver, a DSR medium access control (MAC) control element (CE) from the apparatus in the DSR procedure, wherein the DSR MAC CE comprises a plurality of entries of delay status information for the LCG, each of the plurality of entries comprising a pair of a remaining time field and a buffer size field, and an extension (EXT) field indicative of whether an additional pair of the remaining time field and the buffer size field is present for the LCG in a subsequent entry.

12. The network node of Claim 11, wherein the configuration further comprises a plurality of reporting thresholds on remaining time for reporting the delay status information for the LCG, and each of the plurality of entries of the delay status information is associated with one of the plurality of reporting thresholds, wherein the configuration further comprises a DSR reporting threshold list comprising the plurality of reporting thresholds, wherein the configuration is transmitted in a MAC-CellGroupConfig information element (IE) of a radio resource control (RRC) signaling.

13. The network node of Claim 12, wherein for each of the plurality of entries of the delay status information, the remaining time field indicates a shortest remaining time among all packet data convergence protocol (PDCP) service data units (SDUs) that have not been transmitted in any MAC protocol data unit (PDU) and are associated with the one of the plurality of reporting thresholds, and the buffer size field indicates a total amount of delay-reporting data associated with the one of the plurality of reporting thresholds.

14. The network node of Claim 11, wherein the EXT field comprises one bit, which is set to 1 to indicate that the additional pair of the remaining time field and the buffer size field is present for the same LCG in the subsequent entry, or is set to 0 to indicate that no additional field is present for the same LCG in the subsequent entry, wherein each of the plurality of entries of the delay status information for the LCG is reported in two consecutive octets of the DSR MAC CE, wherein the plurality of entries of the delay status information for the LCG are reported consecutively in an ascending order based on values of the plurality of reporting thresholds.

15. The network node of Claim 11, wherein the delay status information for different LCGs is comprised in the DSR MAC CE in an ascending order based on LCG fields corresponding to the different LCGs, and each of the LCG fields indicates whether the delay status information for one LCG is present.
